# EUROPÄISCHE PATENTANMELDUNG

(11) **EP 4 450 455 A1**
(43) Veröffentlichungstag der Anmeldung: **23.10.2024**
(21) Anmeldenummer: 23168479.6
(22) Anmeldetag: 18.04.2023
(51) Int. Cl.: B82Y 10/00, G06N 10/00, G02F 1/017

(54) **QUANTENSCHALTKREIS UND VERFAHREN ZU DESSEN HERSTELLUNG**

(71) Anmelder: Gottfried Wilhelm Leibniz Universität Hannover, 30167 Hannover (DE)
(72) Erfinder: Schmidt, Constantin, 30419 Hannover (DE); Ding, Prof. Dr. Fei, 30559 Hannover (DE); Zopf, Dr. Michael, 31535 Neustadt am Rübenberge (DE)
(74) Vertreter: Günther, Constantin

(57) **Zusammenfassung**

Die Erfindung betrifft einen Quantenschaltkreis in Form einer integrierten Schaltkreis-Anordnung mit wenigstens einer Halbleiterschicht, in der eine Vielzahl von photonischen Quantenpunkten angeordnet ist. Die Erfindung betrifft außerdem ein Verfahren zur Herstellung eines derartigen Quantenschaltkreises.

## Beschreibung

Die Erfindung betrifft einen Quantenschaltkreis in Form einer integrierten Schaltkreis-Anordnung mit wenigstens einer Halbleiterschicht, in der eine Vielzahl von photonischen Quantenpunkten angeordnet ist. Die Erfindung betrifft außerdem ein Verfahren zur Herstellung eines derartigen Quantenschaltkreises.

In dem letzten Jahrzehnt ist das Forschungsgebiet der integrierten photonischen Quantenschaltkreise stark aufgeblüht. Es gibt zunehmende Publikationen und Firmengründungen in diesem Gebiet. Im Herzen dieser Quantenschaltkreise liegen einzelne Photonen (Lichtteilchen) und verschränkte Photonenpaare. Epitaktisch gewachsene Halbleiter Quantenpunkte haben sich zu hervorragenden Quellen solcher Photonen entwickelt und können dank ihrer Wachstumsart auf den photonischen Chips direkt in Mikro-/Nanostrukturen integriert werden, woraus letztendlich Quantenschaltkreise mit Hilfe der in der Halbleiterindustrie standardmäßig eingesetzten Herstellungsverfahren erzeugt werden können. Auch andere Einzelphotonenemitter wie z.B. Moleküle oder Stickstoff-Defektzentren in Diamant, stehen im Fokus der aktuellen Forschung. Epitaktisch gewachsene Quantenpunkte sind auf dem Chip statistisch verteilt - sowohl was den Ort angeht als auch die Symmetrie sowie der Emissionscharakteristiken. Unterschiedliche Emissionscharakteristiken werden durch Unterschiede in der Wellenlänge der abgestrahlten Photonen von den individuellen Quantenpunkten deutlich. Die Symmetrie ist ein wichtiger Punkt, wenn es um die Erzeugung von sog. "verschränkten" Photonenpaaren geht, denn eine Reduktion der Symmetrie geht mit einer Reduktion der Verschränkung von den erzeugten Photonen einher. Es bedarf folglich einer "Tuning"-Möglichkeit, um diese Unterschiede zu eliminieren.

Ebenfalls können bzw. müssen andere Arten von Einzelphotonenemitter getuned werden, welche ebenfalls in photonische Mikro- /Nanostrukturen integriert werden können.

Das sog. "strain-tuning" ist eine Möglichkeit, um diese Imperfektion in der Symmetrie auszugleichen und um die Wellenlänge des abgestrahlten Lichtes zu steuern. Dabei kann ein piezoelektrisches Material (Eine mechanische Spannung entsteht bei Anlegen einer elektrischen Spannung) verwendet werden, auf welches der Chip geklebt wird, sodass es einen Spannungsübertrag gibt. Damit lassen sich alle Quantenpunkte und integrierte Einzelphotonenquellen sonstiger Art in dem Chip gleichermaßen tunen/steuern, jedoch nicht individuell, sodass die Quantenpunkte/Einzelphotonenquellen nicht individuell aufeinander abgestimmt werden können, um sie in der Wellenlänge der abgestrahlten Photonen anzugleichen.

Der Erfindung liegt die Aufgabe zugrunde, einen Quantenschaltkreis mit verbesserter Tuning-Möglichkeit der Quantenpunkte sowie ein Verfahren zur Herstellung eines solchen Quantenschaltkreises anzugeben.

Diese Aufgabe wird bei einem Quantenschaltkreis der eingangs genannten Art dadurch gelöst, dass die integrierte Schaltkreis-Anordnung wenigstens eine mit der Halbleiterschicht verbundene Aktuatorschicht hat, die eine Vielzahl von individuell ansteuerbaren Aktuatoren aufweist, wobei die Aktuatoren dazu eingerichtet sind, in Abhängigkeit von einem dem jeweiligen Aktuator zugeführten elektrischen Ansteuersignal wenigstens eine Emissionscharakteristik eines oder mehrerer dem Aktuator zugeordneter Quantenpunkte zu verändern. Die Erfindung hat den Vorteil, dass durch die Vielzahl der Aktuatoren die unterschiedlichen Quantenpunkte individuell bzw. zumindest in kleineren Gruppen gezielt getuned werden können. Hierzu können die verschiedenen Aktuatoren mit individuellen Ansteuersignalen angesteuert werden. Durch die Aktuatoren kann die Emissionscharakteristik von Quantenpunkten verändert, d.h. getuned werden, insbesondere im Sinne eines sogenannten "strain-tuning". Dies ermöglicht wiederum ein Hochskalieren der Komplexität der integrierten quantenoptischen Schaltkreise.

Die photonischen Quantenpunkte können z.B. als verschränkte Photonenpaare ausgebildet sein. Die Quantenpunkte können als epitaktisch gewachsene Halbleiter-Quantenpunkte ausgebildet sein. Die integrierte Schaltkreis-Anordnung kann als integrierter Schaltkreis (IC - integrated circuit) im Sinne der Halbleitertechnik realisiert sein. Die Aktuatoren können als Dünnschichtaktuatoren ausgebildet sein, z.B. mit einer Schichtdicke von weniger als 50 Mikrometer.

Gemäß einer vorteilhaften Ausgestaltung der Erfindung ist vorgesehen, dass jeder Aktuator genau einem Quantenpunkt oder einer Teilmenge der Vielzahl der Quantenpunkte zugeordnet ist, die wesentlich geringer ist als die Gesamtzahl der Quantenpunkte in der Halbleiterschicht. Hierdurch werden sehr flexible Möglichkeiten zum gezielten Tuning der Quantenpunkte bereitgestellt. Die Teilmenge kann zum Beispiel weniger als 10 % der Gesamtzahl der Quantenpunkte umfassen.

Gemäß einer vorteilhaften Ausgestaltung der Erfindung ist vorgesehen, dass einer, mehrere oder alle Aktuatoren als Piezo-Aktuatoren ausgebildet sind, die dazu eingerichtet sind, in Abhängigkeit von einem dem jeweiligen Aktuator zugeführten elektrischen Ansteuersignal durch Übertragung mechanischer Spannung auf die Halbleiterschicht die Emissionscharakteristik des oder der dem Aktuator zugeordneten Quantenpunkte zu verändern. Durch solche Piezo-Aktuatoren kann sehr effizient und präzise die Emissionscharakteristik der Quantenpunkte beeinflusst werden. Zudem können solche Piezo-Aktuatoren auf einfache und vorteilhafte Weise in einer integrierten Halbleiter-Schaltkreisanordnung realisiert werden, insbesondere als Dünnschicht-Piezoaktuatoren. Dies ermögliche insbesondere die Aufbringung einer zunächst unstrukturierten Schicht aus dem Piezo-Material und eine anschließende Strukturierung dieser Schicht mit in der Halbleiterbranche üblichen Strukturierungsverfahren zu den einzelnen, separaten Piezo-Aktuatoren.

Gemäß einer vorteilhaften Ausgestaltung der Erfindung ist vorgesehen, dass die Aktuatoren nach Art einer Matrix zweidimensional flächig über wenigstens eine Oberfläche des Quantenschaltkreises verteilt angeordnet sind, insbesondere gemäß einem gleichmäßigen Raster. Auf diese Weise können die unter den Aktuatoren angeordneten Quantenpunkte zielgerichtet und präzise mit mechanischen Spannungen beaufschlagt und damit hinsichtlich ihrer Emissionscharakteristik beeinflusst werden.

Gemäß einer vorteilhaften Ausgestaltung der Erfindung ist vorgesehen, dass der Quantenschaltkreis eine Vielzahl von steuerbaren Halbleiterbauelementen hat, wobei jeweils wenigstens eines der steuerbaren Halbleiterelemente einem Aktuator zu dessen Ansteuerung mit einem elektrischen Ansteuersignal zugeordnet ist. Dies hat den Vorteil, dass die Aktuatoren über die steuerbaren Halbeiterbauelemente direkt individuell angesteuert werden können. Solche Halbleiterbauelemente können ebenfalls mit in der Halbleiterbranche üblichen Verfahren gut in den Schichtaufbau eines integrierten Schaltkreises integriert werden. Die steuerbaren Halbleiterbauelemente können z.B. als Transistoren ausgebildet sein, z.B. als Feldeffekttransistoren.

Gemäß einer vorteilhaften Ausgestaltung der Erfindung ist vorgesehen, dass die steuerbaren Halbleiterbauelemente als eine auf der Halbleiterschicht angeordnete oder mit der Halbleiterschicht verbundene Schicht aus Dünnfilmtransistoren (TFT-Schicht) ausgebildet sind. Auf diese Weise kann der gesamte Quantenschaltkreis mit den steuerbaren Halbleiterbauelementen sehr effizient und in großindustriellem Maßstab mit Verfahren der Halbleiterindustrie realisiert werden.

Gemäß einer vorteilhaften Ausgestaltung der Erfindung ist vorgesehen, dass die Quantenpunkte oder zumindest eine Teilmenge der Quantenpunkte in wenigstens einem bestimmten Gebiet der Halbleiterschicht matrixartig verteilt angeordnet sind, insbesondere gemäß einem gleichmäßigen oder ungleichmäßigen Raster. Dies ermöglicht eine gute Zuordnung zwischen den Quantenpunkten und deren Aktuatoren.

Gemäß einer vorteilhaften Ausgestaltung der Erfindung ist vorgesehen, dass zwischen einigen oder allen Aktuatoren Zwischenräume gebildet sind, die mit wenigstens einem Füllmaterial ausgefüllt sind. Die Zwischenräume können z.B. beim Strukturieren der durchgehenden Aktuatorschicht entstehen. Durch das Ausfüllen der Zwischenräume kann eine zusätzliche Isolation zwischen den Aktuatoren realisiert werden. Zudem kann die mechanische Stabilität des gesamten Aufbaus verbessert werden. Als Füllmaterial kann z.B. ein Isolationsmaterial verwendet werden, z.B. eine Oxidschicht.

Die eingangs genannte Aufgabe wird außerdem gelöst durch ein Verfahren zur Herstellung eines Quantenschaltkreises der zuvor erläuterten Art, mit folgenden Schritten:
a) Herstellen der Halbleiterschicht mit den Quantenpunkten,
b) Aufbringen einer Aktuatorschicht mittelbar oder unmittelbar auf der Halbleiterschicht,
c) Strukturieren der Aktuatorschicht derart, dass eine Vielzahl von separaten einzelnen Aktuatoren gebildet wird, die jeweils einem Quantenpunkt oder einer Teilmenge von Quantenpunkte zugeordnet sind und die individuell ansteuerbar sind.

Die Aktuatoren sind dazu eingerichtet, in Abhängigkeit von einem dem jeweiligen Aktuator zugeführten elektrischen Ansteuersignal wenigstens eine Emissionscharakteristik eines oder mehrerer dem Aktuator zugeordneter Quantenpunkte zu verändern. Auch hierdurch können die zuvor erläuterten Vorteile realisiert werden. Insbesondere können für die Realisierung eines solchen Quantenschaltkreises die in der Halbleiterindustrie bereits bewährten Prozessschritte eingesetzt werden. Das Strukturieren der Aktuatorschicht kann z.B. durch ein Herunterätzen eines Teils der Schicht erfolgen, sodass die einzelnen Aktuatoren elektrisch voneinander separiert sind.

Gemäß einer vorteilhaften Ausgestaltung der Erfindung ist vorgesehen, dass auf der Aktuatorschicht und/oder den einzelnen Aktuatoren eine Schicht aus steuerbaren Halbleiterbauelementen aufgebracht wird. Diese Schicht kann als Dünnfilmschicht aufgebracht werden, in der die Halbleiterbauelemente, z.B. Transistoren, als Matrix ausgebildet sind. Die einzelnen Halbleiterbauelemente werden dann jeweils mit einem zugeordneten Aktuator elektrisch verbunden, um diesen mit einem elektrischen Ansteuersignal ansteuern zu können.

Die Halbleiterschicht mit den Quantenpunkten kann z.B. mit folgendem Verfahren hergestellt werden: Mit Hilfe von z.B. Molekularstrahlepitaxie können Halbleiterschichten sehr präzise - mit Atomlagengenauigkeit - gewachsen werden. In Verbindung mit einem Ätzprozess wie dem "local droplet etching" können so kleine Löcher in die Halbleiterschicht geätzt werden, welche erneut durch Molekularstrahlepitaxie gefüllt werden können, sodass Quantenpunkte erzeugt werden.

Die Aktuatorschicht kann z.B. mit folgendem Verfahren auf die Halbleiterschicht aufgebracht werden: Die Aktuatorschicht kann z.B. entweder gebonded werden, wobei bei erhöhtem Druck und erhöhter Temperatur der bereits vorhandene Aktuator auf die Halbleiterschicht gedrückt wird, oder die Aktuatorschicht wird aufgeklebt mittels eines Klebers wie z.B. SU-8. Des Weiteren besteht die Möglichkeit, mit Hilfe von eines PVD (physical vapour depostion) Prozesses, die Aktuatorschicht direkt aufzudampfen.

Die Erfindung wird nachfolgend anhand von Ausführungsbeispielen unter Verwendung von Zeichnungen näher erläutert.

Es zeigen:
Figur 1 - einen Quantenschaltkreis in seitlicher Schnittansicht,
Figur 2 - eine Schnittansicht auf die Halbleiterschicht des Quantenschaltkreises gemäß

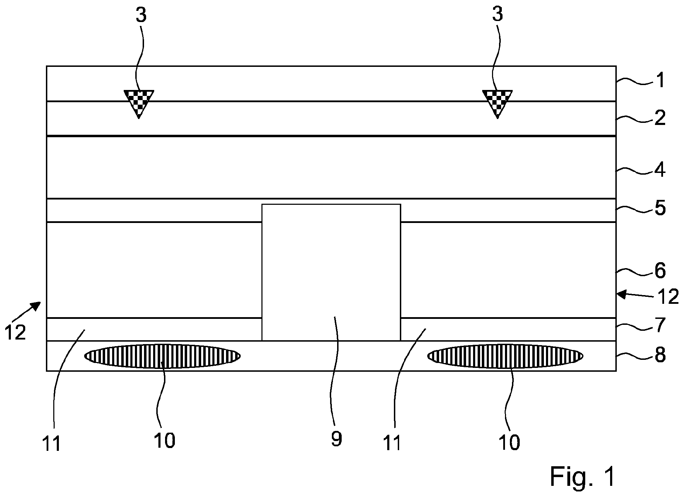

Figur 1 in Draufsicht,

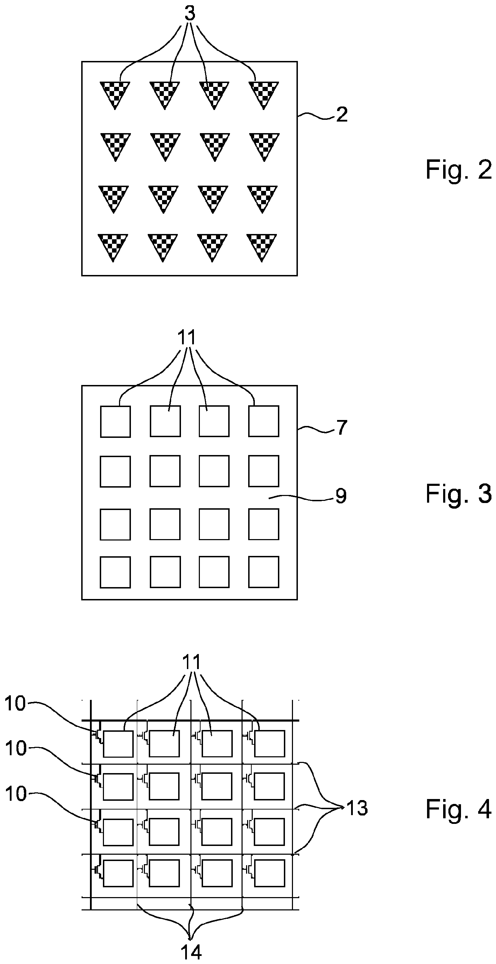

Figur 3 - eine Schnittansicht auf die Aktuatorschicht des Quantenschaltkreises gemäß
Figur 1 in Draufsicht,
Figur 4 - eine Schnittansicht auf die Schicht der steuerbaren Halbleiterbauelemente des Quantenschaltkreises gemäß Figur 1 und deren Verschaltung in Draufsicht.

Die Figur 1 verdeutlicht den Schichtaufbau eines erfindungsgemäßen Quantenschaltkreises. In einer Schichtanordnung mit Schichten 1, 2 aus Halbleitermaterial, z.B. III-V Material, z.B. AlGaAs, werden photonische Quantenpunkte 3 erzeugt. Unter den Schichten 1, 2 befindet sich eine Oxidschicht 4, z.B. aus Aluminiumoxid oder Siliziumoxid, die als Isolationsschicht dient. An diese Schicht 4 schließt sich ein Schichtaufbau mit den Schichten 5, 6, 7 an, der eine Aktuatorschicht mit einer Vielzahl einzelner, individuell ansteuerbare Aktuatoren 12 ausbildet. Die Aktuatoren 12 sind durch Freiräume voneinander beabstandet. Die Freiräume können mit Füllmaterial 9 ausgefüllt sein.

Die Aktuatoren 12 können z.B. als Piezoaktuatoren ausgebildet sein. Hierzu kann z.B. auf der Schicht 4 eine Schicht aus einem elektrisch gut leitenden Material aufgebracht sein, z.B. Gold, Aluminium, Silber, Titan oder Chrom. Auch Mischungen solcher Materialien können verwendet werden. Hieran schließt sich eine Schicht 6 aus piezoelektrischem Material an, z.B. PMN-PT. Hieran schließt sich wiederum eine Schicht 7 aus elektrisch gut leitendem Material an, z.B. aus einem oder mehreren Materialien, wie sie zuvor bzgl. der Schicht 5 genannt wurden. Die Schichten 5, 6, 7 können zunächst durchgehend flächig auf der Schicht 4 aufgebracht werden, d.h. ohne die Unterbrechung durch das Füllmaterial 9. Nach Aufbringung der flächigen Schichten werden diese strukturiert, z.B. mittels eines Ätzprozesses, sodass zwischen den Aktuatoren 12 die Freiräume entstehen, die z.B. mit dem Füllmaterial 9 ausgefüllt werden können. Beim Ätzprozess wird z.B. die Schicht 7 und die piezoelektrische Schicht 6 vollständig herunter geätzt. Zudem kann sich diese Segmentierung bis in die Schicht 5 hinein erstrecken, wobei es vorteilhaft ist, diese Schicht 5 nicht vollständig zu unterbrechen. Im späteren Betrieb können die einzelnen Aktuatoren 12 dann besonders einfach mit elektrischen Signalen beaufschlagt werden, indem die hierbei für jeden Aktuator 12 separat gebildeten Kontakte 11 als individuelle Anschlusskontakte der Aktuatoren genutzt werden, um diese mit individuellen elektrischen Ansteuersignalen zu beaufschlagen. An die elektrisch leitende Schicht 5 kann dann ein gemeinsames Referenzpotential für alle Aktuatoren 12 angelegt werden.

Auf der Aktuatorschicht 5, 6, 7 kann dann eine Vielzahl von steuerbaren Halbleiterelementen 10 aufgebracht werden. Fertigungstechnisch kann diese Schicht besonders günstig dadurch aufgebracht werden, dass eine Halbleiterschicht 8 mit darin ausgebildeten Dünnfilmtransistoren als Halbleiterbauelemente 10 erzeugt wird.

Die Figur 2 zeigt in Draufsicht auf eine Schnittdarstellung der Schichten 1, 2 eine mögliche Anordnung der flächigen Verteilung der Quantenpunkte 3.

Die Figur 3 zeigt eine matrixartige Verteilung der Piezoaktuatoren 12 bzw. deren Anschlusskontakte 11 sowie das umgebende Füllmaterial 9 in einer Schnittdarstellung durch die Schicht 7.

Die Figur 4 verdeutlicht die Anordnung der Halbleiterbauelemente 10 in der Schicht 8 in Relation zu den Anschlusskontakte 11. Beispielsweise können die Halbleiterbauelemente 10 als Transistoren ausgebildet sein, z.B. Feldeffekttransistoren. Dann kann z.B. jeweils ein schaltbarer Anschluss des Halbleiterbauelements 10, z.B. der Source-Anschluss eines Transistors, mit jeweils einem Anschlusskontakt 11 verbunden sein. Die Drain-Anschlüsse einer Horizontalreihe von Transistoren können dann mit einer gemeinsamen Versorgungsspannungsleitung 13 verbunden sein. Die Gate-Anschlüsse einer Vertikalreihe von Transistoren kann mit jeweils einer gemeinsamen Ansteuerleitung 14 verbunden sein. Durch Anlegen jeweils geeigneter Potentiale an den Leitungen 13, 14 kann jeder Piezo-Aktuator 12 individuell angesteuert werden, ähnlich wie in Bildschirmen, wo jeder Pixel angesteuert wird. Die Dünnfilmtransistoren können z.B. als TFT-Schicht ausgebildet sein.

Eine Herausforderung hierin besteht, bei vielen Quantenpunkten 3 (Die Quantenpunktdichte beträgt typischerweise 10 Stück pro Quadratmikrometer) bzw. Einzelphotonenquellen auch wirklich alle Anschlusskontakte 11 und somit die piezoelektrischen Schichten anzusteuern. Dafür können vorteilhaft als Halbleiterbauelemente 10 Dünnfilmtransistoren als Matrix verwendet werden, welche bereits in der Halbleiterbranche seit 2 Jahrzehnten etabliert sind. Diese lassen sich nicht nur beschränken auf das strain tuning, sondern können ebenfalls verwendet werden für ein tunen des elektrischen Feldes, bei dem statt dem mechanischen Stress einfach das durch die angelegte Spannung in den Verbindungen/Transistoren erzeugte elektrische Feld die Einzelphotonenquellen tuned. Das Kontaktieren zwischen den Anschlusskontakte 11 und den Halbleiterbauelemente 10 kann durch sog. Bonden umgesetzt werden. Alternativ können bei weniger angesteuerten Quantenpunkten zunächst zu den Anschlusskontakten 11 einfache Leitungen gelegt werden, um die Ansteuerung im ersten Schritt einfacher zu gestalten.

Um einzelne Quantenpunkte/Einzelphotonenquellen individuell anzusteuern, bedarf es eines strukturierten Tunings. Eine Möglichkeit hierbei ist, statt einem "Bulk" piezoelektrischen Material, welches einfach angeklebt wird, einen Dünnschichtpiezoaktuator (thin-film PMN-PT) zu verwenden, dessen Dicke kleiner als 50 Mikrometer ist. Dies ermöglicht die Strukturierung des Piezoaktuators mit den aus der Halbleiterbranche üblichen Herstellungsverfahren. Dabei soll die piezoelektrische Schicht bis auf die angrenzende Goldschicht heruntergeätzt werden, damit ein Graben frei wird, das zur "Isolierung" mit einem Puffer gefüllt wird.

## Patentansprüche

1. Quantenschaltkreis in Form einer integrierten Schaltkreis-Anordnung mit wenigstens einer Halbleiterschicht (1, 2), in der eine Vielzahl von photonischen Quantenpunkten (3) angeordnet ist, **dadurch gekennzeichnet, dass** die integrierte Schaltkreis-Anordnung wenigstens eine mit der Halbleiterschicht (1, 2) verbundene Aktuatorschicht (5, 6, 7) hat, die eine Vielzahl von individuell ansteuerbaren Aktuatoren (12) aufweist, wobei die Aktuatoren (12) dazu eingerichtet sind, in Abhängigkeit von einem dem jeweiligen Aktuator (12) zugeführten elektrischen Ansteuersignal wenigstens eine Emissionscharakteristik eines oder mehrerer dem Aktuator (12) zugeordneter Quantenpunkte (3) zu verändern.

2. Quantenschaltkreis nach Anspruch 1, **dadurch gekennzeichnet, dass** jeder Aktuator (12) genau einem Quantenpunkt (3) oder einer Teilmenge der Vielzahl der Quantenpunkte (3) zugeordnet ist, die wesentlich geringer ist als die Gesamtzahl der Quantenpunkte (3) in der Halbleiterschicht (1, 2).

3. Quantenschaltkreis nach einem der vorhergehenden Ansprüche, **dadurch gekennzeichnet, dass** einer, mehrere oder alle Aktuatoren (12) als Piezo-Aktuatoren ausgebildet sind, die dazu eingerichtet sind, in Abhängigkeit von einem dem jeweiligen Aktuator (12) zugeführten elektrischen Ansteuersignal durch Übertragung mechanischer Spannung auf die Halbleiterschicht (1, 2) die Emissionscharakteristik des oder der dem Aktuator (12) zugeordneten Quantenpunkte (3) zu verändern.

4. Quantenschaltkreis nach einem der vorhergehenden Ansprüche, **dadurch gekennzeichnet, dass** die Aktuatoren (12) nach Art einer Matrix zweidimensional flächig über wenigstens eine Oberfläche des Quantenschaltkreises verteilt angeordnet sind, insbesondere gemäß einem gleichmäßigen Raster.

5. Quantenschaltkreis nach einem der vorhergehenden Ansprüche, **dadurch gekennzeichnet, dass** der Quantenschaltkreis eine Vielzahl von steuerbaren Halbleiterbauelementen (10) hat, wobei jeweils wenigstens eines der steuerbaren Halbleiterelemente (10) einem Aktuator (12) zu dessen Ansteuerung mit einem elektrischen Ansteuersignal zugeordnet ist.

6. Quantenschaltkreis nach Anspruch 5, **dadurch gekennzeichnet, dass** die steuerbaren Halbleiterbauelemente (10) als eine auf der Halbleiterschicht (1, 2) angeordnete oder mit der Halbleiterschicht (1, 2) verbundene Schicht aus Dünnfilmtransistoren ausgebildet sind.

7. Quantenschaltkreis nach einem der vorhergehenden Ansprüche, **dadurch gekennzeichnet, dass** die Quantenpunkte (3) oder zumindest eine Teilmenge der Quantenpunkte (3) in wenigstens einem bestimmten Gebiet der Halbleiterschicht (1, 2) matrixartig verteilt angeordnet sind, insbesondere gemäß einem gleichmäßigen oder ungleichmäßigen Raster.

8. Quantenschaltkreis nach einem der vorhergehenden Ansprüche, **dadurch gekennzeichnet, dass** zwischen einigen oder allen Aktuatoren (12) Zwischenräume gebildet sind, die mit wenigstens einem Füllmaterial (9) ausgefüllt sind.

9. Verfahren zur Herstellung eines Quantenschaltkreises nach einem der vorhergehenden Ansprüche, mit folgenden Schritten:
a) Herstellen der Halbleiterschicht (1, 2) mit den Quantenpunkten (3),
b) Aufbringen einer Aktuatorschicht (5, 6, 7) mittelbar oder unmittelbar auf der Halbleiterschicht (1, 2),
c) Strukturieren der Aktuatorschicht (5, 6, 7) derart, dass eine Vielzahl von separaten einzelnen Aktuatoren (12) gebildet wird, die jeweils einem Quantenpunkt (3) oder einer Teilmenge von Quantenpunkte (3) zugeordnet sind und die individuell ansteuerbar sind.

10. Verfahren nach Anspruch 9, **dadurch gekennzeichnet, dass** auf der Aktuatorschicht (5, 6, 7) und/oder den einzelnen Aktuatoren (12) eine Schicht aus steuerbaren Halbleiterbauelementen (10) aufgebracht wird.
